## Europäisches Patentamt
## European Patent Office
## Office européen des brevets

(19)

(11) Veröffentlichungsnummer: **0 219 518**
**B1**

(12)

# EUROPÄISCHE PATENTSCHRIFT

(45) Veröffentlichungstag der Patentschrift:
26.07.89

(51) Int. Cl.⁴: **E 01 H 1/04, B 60 B 33/00**

(21) Anmeldenummer: **86902400.0**

(22) Anmeldetag: **08.04.86**

(86) Internationale Anmeldenummer:
**PCT/EP 86/00208**

(87) Internationale Veröffentlichungsnummer:
**WO 86/06120 (23.10.86 Gazette 86/23)**

(54) STRASSENKEHRMASCHINE.

(30) Priorität: **09.04.85 DE 3512730**

(43) Veröffentlichungstag der Anmeldung:
**29.04.87 Patentblatt 87/18**

(45) Bekanntmachung des Hinweises auf die Patenterteilung:
**26.07.89 Patentblatt 89/30**

(84) Benannte Vertragsstaaten:
**AT BE CH DE FR GB IT LI LU NL SE**

(56) Entgegenhaltungen:
**DE-A- 2 326 241**
**DE-A- 2 364 022**
**DE-A- 2 460 584**
**FR-A- 2 220 628**
**GB-A- 824 160**
**GB-A- 1 573 501**

(73) Patentinhaber: **"SAKU" MASCHINENBAU A. SCHMID, D-8398 Pocking (DE)**
Patentinhaber: **LINTEC GmbH + Co. KG, Ahornallee 1, D-2114 Hollenstedt (DE)**

(72) Erfinder: **SCHMID, Max, Schillerstrasse 30, D-8398 Pocking (DE)**
Erfinder: **LEX, Peter, Plinganserstrasse 22, D-8399 Griesbach 1 (DE)**

(74) Vertreter: **Walter, Helmut, Aubingerstrasse 81, D-8000 München 60 (DE)**

## Beschreibung

Die Erfindung bezieht sich auf eine Straßenkehrmaschine mit einer Kehreinrichtung, einem Aufnahmebehälter für das Kehrgut und einer Aufgabevorrichtung zum Transport des Kehrgutes von der Straße in den Aufnahmebehälter, wobei zahngetriebeartig ineinandergreifende, den beiden Seitenwänden des Gehäuses der Aufgabevorrichtung gegenüber drehbar gelagerte, Kehrwalzen das Kehrgut aufnehmen und dem Aufnahmebehälter zuführen und wobei der Antrieb der Walzen vom Antrieb des Fahrzeuges abgeleitet ist.

Eine Straßenkehrmaschine mit einigen dieser Merkmale ist in der DE-OS 2 326 241 beschrieben. Dabei ist der Aufnahmebehälter einem Wechselrahmen zugeordnet, der auch die Aufgabevorrichtung trägt, aus Längs- und Querholmen besteht und auswechselbar der Pritsche eines Lastkraftwagens zuzuordnen ist. An dem Wechselrahmen ist auch eine Kehreinrichtung angelenkt, die sich mit Rädern auf dem Boden abstützt. Die Aufgabevorrichtung ist ein Saugaggregat, dessen Saugrüssel mit seinem einen Ende über dem Boden im unmittelbaren Arbeitsbereich der Kehreinrichtung sich befindet und mit seinem anderen Ende an den Aufnahmebehälter angeschlossen ist.

Zweck dieser Lösung ist es, Aufnahmebehälter, Kehreinrichtung und Aufgabevorrichtung in der Form des Saugaggregates als in sich geschlossene Baugruppe zu haben, die in ihrer Gesamtheit durch Lösen der Verbindungen zwischen Wechselrahmen und Fahrzeug vom Fahrzeug abgebaut werden kann, so daß dieses als normales Nutzfahrzeug, z.B. zum Transport von Streugut, eingesetzt werden kann. Diese Lösung macht zwar einen schnellen Umbau des Fahrzeuges möglich, die vom Wechselrahmen getragene, an- und abbaubare Baugruppe ist aber vielteilig und kompliziert, so daß Reparatur- und Wartungsarbeiten an der Baugruppe nur mit erheblichem Aufwand durchgeführt werden können. Demzufolge ist die Aufgabevorrichtung eine in der Anschaffung relativ teuere, jedoch wenig störanfällige pneumatische Saugvorrichtung. In der Konsequenz dieser Lösung liegt es auch, daß der dem Wechselrahmen zugeordneten Baugruppe ein separater, vom Fahrzeugantrieb unabhängiger Antrieb zugeordnet ist.

Eine gattungsgemäße Straßenkehrmaschine ist in der FR-A-2 220 628 beschrieben, die eine Erfindung eines der beiden Erfinder beschreibt, die in den vorliegenden Unterlagen genannt sind. Insbesondere sind auch dabei in einem Gehäuse übereinander zwei Kehrwalzen angeordnet, die zahnradartig ineinandergreifen und in den Gehäuseseitenwänden drehbar gelagert sind. Drehen sich die Kehrwalzen, so nimmt die untere Kehrwalze das Kehrgut von der Straße auf, und dieses Kehrgut wird rein mechanisch dem Aufnahmebehälter zugeführt. In dieser Entgegenhaltung ist eine Kehreinrichtung mit Aufnahmebehälter zu einer Baugruppe zusammengefaßt, wie sie im Prinzip auch bei der vorliegenden Erfindung vorgesehen ist, jedoch in einer Aufteilung derart, daß die Kehreinrichtung eine Baugruppe ohne Aufnahmebehälter ist, der seinerseits dem Straßenfahrzeug zugeordnet ist, dem die Baugruppe für den Betrieb zuzuordnen ist und von dem die Baugruppe zu trennen ist, um Baugruppe oder Fahrzeug beispielsweise zu reparieren oder zu warten, während andererseits intaktes Fahrzeug oder intakte Baugruppe zur anderweitigen Verwendung zur Verfügung stehen.

Aufgabe der Erfindung ist es, eine Straßenkehrmaschine so auszugestalten, daß ein kompaktes, gut manövrierfähiges und hochwirksames Gerät vorliegt, dessen Wartung keine besonderen Probleme aufgibt. Es sollen dabei Teile verwendet und einander zugeordnet werden, daß das Gerät mit einem angesichts seiner betrieblichen Vorteile geringen Kostenaufwand hergestellt werden kann und nur geringe Ausfallzeiten für notwendige Wartung und Reparaturen eingeplant werden müssen. Eine Reihe von Erfindungsmerkmalen gestalten die Erfindung aus, sind jedoch auch über diesen Anwendungsfall hinaus besonders vorteilhaft anwendbar.

Der Lösung der Aufgabe dient eine Straßenkehrmaschine mit den Merkmalen der Patentansprüche.

Durch die kennzeichnenden Merkmale des Anspruches 1 sind Kehreinrichtung und Aufnahmebehälter unabhängig dem Fahrzeug zugeordnet, während die Aufgabevorrichtung eine rein mechanische Vorrichtung ist, die in ihrer Gesamtheit ohne großen Aufwand dem Fahrzeug zugeordnet und wieder abgebaut werden kann. Insoweit stellt die erfindungsgemäße Straßenkehrmaschine einen Kompromiß zwischen einem reinen Spezialfahrzeug, wie es Kehrmaschinen häufig sind, und einem Fahrzeug der eingangs besprochenen Art dar. Insbesondere der Aufnahmebehälter ist ein separat an- und abbaubares Bauteil, das ohne besonderen Aufwand einfach an- und abbaubar ist, während eine Aufgabevorrichtung der vorgesehenen Art an sich vielteilig ist und demnach ein sehr kompliziertes Fahrzeug ergäbe, wenn seine Teile unabhängig voneinander am Fahrzeug selbst gelagert wären.

Hier ist es vorteilhaft, alle Teile zu einer in ihrer Gesamtheit an- und abbaubaren Einheit zusammenzufassen. Die Anwendung einer rein mechanischen Aufgabevorrichtung hat gegenüber der oben erwähnten pneumatischen Aufgabevorrichtung eine ganze Reihe von Vorteilen, wozu insbesondere ein umweltfreundlicher Betrieb und die Möglichkeit, konventionelle, leicht ersetzbare Teile zu verwenden, gehören.

Eine ähnliche Übergabevorrichtung ist zwar aus der DE-OS 2 364 022 bekannt. Während aber bei der Erfindung die Kehrwalzen der Übergabevorrichtung nach der Art von Zahnrädern ineinandergreifen, nutzen die Kehrwalzen der bekannten Vorrichtung die auftretende Schleuderwirkung aus, und es ist keine der Übergabevorrichtung vorgeschaltete Kehrvorrichtung vorgesehen. Das weist die bekannte Vorrichtung als spezielle Kehrmaschine zum Aufnehmen von Gras und ähnlichem Kehrgut auf, während die erfindungsgemäße Kehrmaschine für übliches, Staub entwickelndes Kehrgut geeignet ist.

Die Erfindung ist nachfolgend anhand einer in der Zeichnung dargestellten, bevorzugten Ausführungsform beschrieben und erläutert. Dabei zeigen :

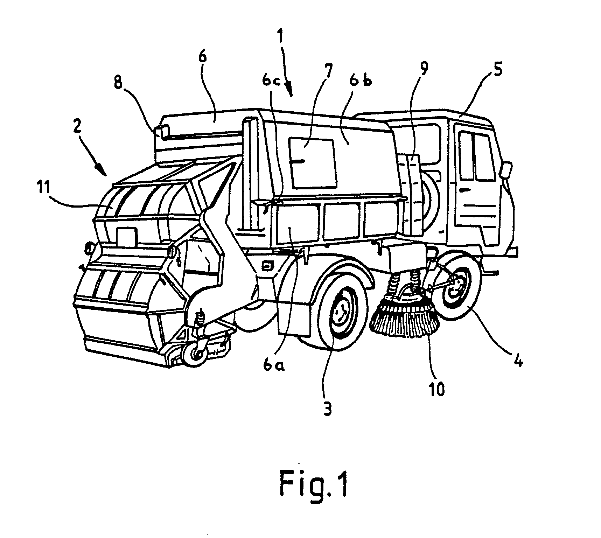

Fig. 1 die Gesamtheit einer erfindungsgemäßen Straßenkehrmaschine in perspektivischer Darstellung,

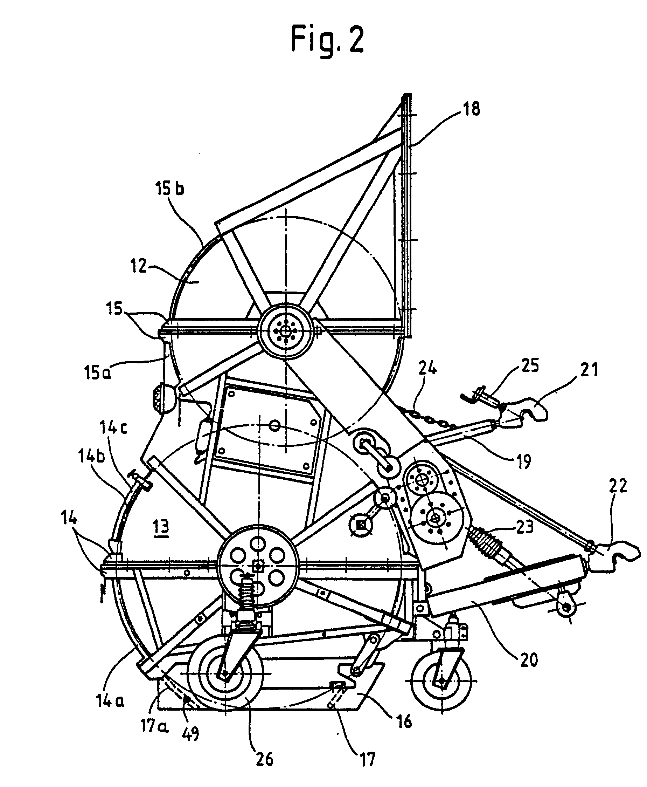

Fig. 2 die erfindungsgemäße Übergabevorrichtung, wie sie bei der Straßenkehrmaschine gemäß Fig. 1 vorgesehen ist in der Seitenansicht und größerer Darstellung,

Fig. 3 und 4 Einzelheiten der Anordnung.

Generell besteht die erfindungsgemäße Straßenkehrmaschine aus einem gegebenenfalls auch als Kleinkraftfahrzeug ausgebildeten Fahrzeug 1 und einer separaten Aufgabevorrichtung 2, die normalerweise mit dem Kraftfahrzeug verbunden ist, ohne besonderen Aufwand an Arbeit, Zeit und Werkzeug, jedoch auch von dem Kraftfahrzeug zu trennen und mit diesem oder einem entsprechenden anderen Kraftfahrzeug wieder zu verbinden ist. Das Kraftfahrzeug weist zwei achsgleich angeordnete, angetriebene Hinterräder 3 und zwei ihrerseits achsgleich angeordnete, lenkbare Vorderräder 4 auf. Die Bedienung des Fahrzeuges erfolgt von einem Fahrerhaus 5 aus, das über dem Motor angeordnet ist, der die Hinterräder 3 des Kraftfahrzeuges und gegebenenfalls mittels Zapfwellenantrieb Nebenaggregate des Kraftfahrzeuges antreibt und insbesondere auch die Leistung zum Betrieb der Aufgabevorrichtung bereitstellt. Auf der Ladefläche des Kraftfahrzeuges ist ein Behälter 6 zur Aufnahme des aufgesammelten Kehrgutes angeordnet, der durch eine seitliche Öffnung hindurch zugänglich sein kann, die im normalen Betrieb durch einen Deckel 7 verschlossen ist. Vor allem weist der Kehrgutaufnahmebehälter 6 in seiner Rückwand eine Aufnahmeöffnung auf, die von einem Anschlußrahmen für die Aufgabevorrichtung 2 umgrenzt ist und um die herum die Rückwand des Behälters 6 durch ein Trägerwerk 8 versteift ist. Durch die Aufnahmeöffnung ist der Behälter 6 bei angebauter Aufgabevorrichtung zu beladen. Zum Entladen ist der Behälter 6 nach der Art von Seitenkippern um eine untere Längsachse zwangsweise schwenkbar gelagert, und es besteht eine Seitenwand aus einer unteren Klappe 6a, die um eine untere Längsachse nach unten abgeschwenkt werden kann und aus einem oberen Seitenwandteil 6b, das festes Teil des Behälters 6 ist. In der Betriebsstellung ist die Klappe 6a nach oben geschwenkt und mit Verschlüssen 6c mit dem oberen Seitenwandteil 6b verriegelt, so daß der Behälter 6 bis auf die hintere Einfüllöffnung geschlossen ist. Zum Entleeren des Behälters 6 wird nach dem Lösen der Verschlüsse 6c die untere Seitenwandklappe 6a nach unten geschwenkt und der Behälter 6 so seitlich gekippt, daß das Kehrgut durch die von der Klappe 6a freigegebene Öffnung aus dem Behälter 6 herausrutscht. Um das Entleeren zu erleichtern und eine große Entleeröffnung zur Verfügung stellen zu können, kann auch das Oberteil der Seitenwand mit der Klappe 6a als sich öffnende Klappe ausgebildet sein.

Vorzugsweise sollte aus Gründen der baulichen Einfachheit die Entleerung nur nach einer Seite möglich sein, doch ist es kein grundsätzliches Problem, beide Seiten des Behälters 6 gleich auszubilden, den Behälter nach beiden Seiten kippbar vorzusehen und so den Behälter nach beiden Seiten entleeren zu können. In jedem Fall wird allein der Behälter 6 gekippt, Fahrerhaus 5 und im wesentlichen auch die Aufgabevorrichtung 2 verbleiben an ihrem jeweiligen Platz.

Vorzugsweise kann für die Anwendung der Erfindung ein Fahrzeug mit einer Pritsche mit niedrigen Bordwänden vorgesehen werden, bei dem die Klappe 6a eine der Bordwände ist und auf die oberen Ränder der seitlichen und vorderen Bordwände ein Oberteil des Behälters 6 aufgesetzt wird, während nach dem Ab- oder Umbau der hinteren Bordwand die Aufgabevorrichtung 2 angebaut wird. Es kann so ein relativ konventionelles Fahrzeug erfindungsgemäß umgebaut werden.

Zwischen dem Kehrgutaufnahmebehälter 6 und dem Fahrerhaus 5 ist ein Wassertank 9 angeordnet, aus dem heraus zur Verringerung der Staubentwicklung der Arbeitsbereich der Maschine mit Wasser besprüht werden kann. Gegebenenfalls kann der Wassertank 9 auch an einer anderen Stelle des Fahrzeuges angebaut werden, insbesondere, wenn sich das aus Gründen einer gewollten Achslastverteilung als zweckmäßig erweist. So kann es beispielsweise zweckmäßig sein, den Wassertank 9 vor dem Fahrerhaus 5 auf den Fahrzeugrahmen aufzubauen. Zweckmäßig kann es auch sein, den Wassertank innerhalb des Kehrgutaufnahmebehälters 6 anzuordnen und diesen soweit an die Rückwand des Fahrerhauses 5 heranzuführen, wie es mit Rücksicht auf die Relativbewegung des Behälters 6 gegenüber dem Fahrerhaus während des Kippvorganges des Behälters 6 möglich ist. Diese Lösung hat neben praktischen Vorteilen eine optisch besonders befriedigende Fahrzeuggestaltung zur Folge.

Der Arbeitsbereich der Maschine ist durch zwei Tellerbesen 10 gekennzeichnet, die gegenläufig arbeiten, symmetrisch zur lotrechen Fahrzeuglängsmittelebene des Fahrzeuges angeordnet sind, und von einem abschaltbaren Nebenantrieb des Fahrzeugmotors aus um ihre vertikalen Achsen drehbar sind. Sie sind in der Höhe einstellbar, um entsprechend dem Fahrbahnzustand und der Abnutzung der Borsten Rechnung tragen zu können und sie sind in der Querrichtung des Fahrzeuges einstellbar, um bei Gebrauch entsprechend weit über die Fahrzeugumgrenzung hinauszuragen, bei Nichtgebrauch weiter in das Fahrzeugumgrenzungsprofil einzutauchen. In der Fahrzeuglängsmittelebene, d.h. in der Mitte zwischen den beiden Tellerbesen ist eine Auffangleiste für das von der Tellerbesen nach der Mitte geförderte kehrgut vorgesehen, die in sich so elastisch ist, daß sie auf der Fahrbahn aufstehen kann und Fahrbahnunebenheiten in Grenzen zu folgen vermag, andererseits die notwendige Seitenstabilität hat. Mit den Tellerbesen und der Auffangleiste wird das sich im Arbeitsbereich der Maschine befindliche Kehrgut zu einem kleinen Wall unter der Kehrmaschine zusammengekehrt.

Von diesem Wall aus wird nun das Kehrgut von der Aufgabevorrichtung 2 aufgenommen und dem Kehrgutaufnahmebehälter 6 zugeführt.

In den von verschiedenen Teilen des Gehäuses 11 auf der Aufgabevorrichtung 2 gebildeten Seitenwänden dieses Gehäuses sind übereinander angeordnet mindestens zwei Bürstenwalzen 12, 13 gegeneinander umlaufend gelagert, von denen die obere Bürstenwalze 12 einen kleineren Durchmesser als die untere Bürstenwalze 13 hat. Die Bürstenleisten beider Bürstenwalzen laufen auf Lücke, so daß jeweils eine Bürstenleiste einer Walze etwas in die Lücke zwischen zwei Bürstenleisten der anderen Walze ein-

tacht. Die untere Bürstenwalze 13 läuft in der Fahrtrichtung des Fahrzeuges um und nimmt das Kehrgut von der Straße auf, um es im höchsten Bereich der Walze durch eine Übergabeöffnung in dem Gehäuse in die obere Kehrwalze 12 einzuschleudern, die es in ihrem obersten Punkt in den Behälter 6 einschleudert. Die Drehzahlen der Bürstenwalzen 12, 13 sind so aufeinander abgestimmt, daß diese Funktionen erfüllt werden können.

Jede der beiden Bürstenwalzen 12, 13 ist in einem etwa zylindrischen Teilgehäuse 14, 15 angeordnet. Das untere Teilgehäuse 14 hat in Fahrtrichtung kurz vor der unteren Scheitellinie beginnend eine Aufnahmeöffnung, durch die hindurch das Kehrgut von der unteren Kehrwalze 13 aufgenommen werden kann. Dies wird durch eine Leitvorrichtung vor der Aufnahmeöffnung erleichtert, die aus elastischen Seitenleisten 16 an den Enden einer in Fahrzeugquerrichtung verlaufenden Aufnahmeleiste 17 und einer hinteren Anschlagleiste 17a besteht. Die Bürstenwalzen 12, 13 arbeiten im Bereich der Übergabeöffnung zusammen, die das Teilgehäuse 14 der unteren Bürstenwalze mit dem Teilgehäuse 15 der oberen Bürstenwalze verbindet. Die Aufgabeöffnung zur Übergabe des Kehrgutes von der Aufgabevorrichtung 2 in den Behälter 6 ist von einem Anschlußrahmen 18 umgeben, der bei einsatzfähiger Maschine staubdicht an dem Endrahmen innerhalb des Trägerwerkes 8 des Kraftfahrzeuges 1 anliegt.

Jedes Teilgehäuse der Bürstenwalzen besteht aus dem Unterteil 14a bzw. 15a und aus einem Oberteil 14b bzw. 15b. Das Unterteil 14a des Gehäuseunterteiles 14 ist fest in einem Grundrahmen gehalten, der in noch zu beschreibender Weise am Fahrzeug 1 angelenkt ist. Das Oberteil 14b des Gehäuseunterteiles 14 und das Unterteil 15a des Gehäuseoberteiles 15 bilden eine bauliche Einheit, deren Teile 14b und 15a über die Übergabeöffnung miteinander in Verbindung stehen und am unteren Ende des Unterteiles 14b mit einem umlaufendem Flansch versehen ist, mit dem diese Einheit auf einem oberen Flansch des Unterteiles 14a abgestützt ist. Unterteil 14a einerseits und Einheit 14b, 15a anderseits sind durch Schrauben lösbar miteinander verbunden, die durch Schraubenlöcher in den beiden erwähnten Flanschen hindurchgesteckt und festgezogen sind. Auf die Einheit 14b, 15a ist schließlich über zwei entsprechende, entsprechend lösbar miteinander verbundene Flansche, das Oberteil 15b aufgesetzt und beide Teile sind gegeneinander festgelegt. Bis auf die Bereiche der Übergabeöffnung und der Aufgabeöffnung sind die beiden Bürstenwalzen durch das Gehäuse 14, 15 relativ eng umschlossen. Zur Wartung bzw. zum Aus- und Einbau der oberen Bürstenwalze kann das Oberteil 15b nach Lösen der Schraubverbindungen abgenommen werden. Zum Warten bzw. Aus- und Einbauen der unteren Bürstenwalze muß zusätzlich die Einheit 14b, 15a abgenommen werden.

Die kraftübertragende Kupplung zwischen Kraftfahrzeug 1 und Aufgabevorrichtung 2 erfolgt an beiden Seiten mit je einem Lenkerparallelogramm 19, 20, dessen beiden Lenker an den hinteren Enden um Querachsen schwenkbar an dem in diesen Bereichen entsprechend verstärkten Gehäuse 11 bzw. dem Grundrahmen der Aufgabevorrichtung gelagert sind und deren vorderen Enden Kupplungshaken 21, 22 tragen. Der untere Lenker ist mit einem Hydraulikzylinder 23 zwangsweise vertikal verstellbar, um die Aufgabevorrichtung 2 gegenüber dem Kraftfahrzeug 1 zwangsweise heben und senken zu können, während der obere Lenker bis zum Spannen einer Kette 24 vertikal frei verstellbar ist. Der Kupplungshaken 21 des oberen Lenkers 19 ist mit einem Stellelement 25 zwangsweise gegenüber dem Lenker verstellbar. Soll auf die Möglichkeit der dabei gegebenen schnellen Verbindung und Trennung zwischen Kraftfahrzeug 1 und Übergabevorrichtung 2 verzichtet werden, so können statt der Kupplungshaken 21, 22, die über zweckentsprechende Halterungen des Kraftfahrzeuges greifen, Augen vorgesehen sein, durch die und entsprechende Augen des Kraftfahrzeuges Steckbolzen gesteckt sind.

Wichtig ist in beiden Fällen die Ausgestaltung der Lenkerparallelogramme. Grundsätzlich ist jeder obere Lenker 19 kürzer, als der untere Lenker 20 und in der Betriebsstellung ist jeder untere Lenker 20 weniger gegen die Fahrbahnfläche geneigt, als es die oberen Lenker 19 sind. Länge und Neigung der Lenker 19, 20 ergeben sich aus folgendem Betriebskriterium.

Wie noch zu beschreiben sein wird, sind die beiden Räder 26 der Aufgabevorrichtung in Grenzen vertikal verstellbar gelagert. Durch die Lenkerführung können sich die Aufgabevorrichtung und das Fahrzeug infolge beispielsweise des Fahrbahnzustandes vertikal relativ zueinander verstellen. Solche Bewegungen werden durch die Lenker 19, 20 nicht behindert, die in jeder Stellung die Zugkraft des Kraftfahrzeuges auf die Aufgabevorrichtung übertragen. Im Rahmen dieser Bewegungen sollen aber Kraftfahrzeug und Aufgabevorrichtung parallel zu sich selbst und zueinander vertikale Bewegungen gegeneinander ausführen können. Dies ist gewollt, weil dann die Aufgabevorrichtung mit ihrem ihre Ausgabeöffnung umschließenden Rahmen stets dicht an dem Rahmen anliegt, der die Aufnahmeöffnung des Kastens 6 umgibt, wobei zwischen beiden Rahmen gegebenenfalls ein dichtender Moosgummistreifen liegen kann. In einem zwangsweise bewirkten zweiten Bewegungsbereich der Aufgabevorrichtung 2 relativ zum Kraftfahrzeug 1 nach oben bewirken die Lenker 19, 20, daß die Aufgabevorrichtung 2 relativ zum Kraftfahrzeug 1 nach oben bewegt gleichzeitig aber auch in Fahrzeuglängsrichtung vom Kraftfahrzeug 1 entfernt wird, um zwischen den beiden vorgenannten Rahmen einen Abstand herzustellen. Ist in diesem Bewegungsbereich eine obere Endstellung erreicht, so kann der Kasten 6 zum Entleeren nach der Seite gekippt werden ohne durch die Aufgabevorrichtung behindert zu sein.

Das Fahrwerk der Übergabevorrichtung 2 weist ein mittleres, vorderes Stützrad 26a auf, das in einer Gabel drehbar gelagert ist, die um eine horizontale Achse schwenkbar und in zwei Endstellungen festzulegen ist. In der einen Endstellung ist das Stützrad 26a nach oben geschwenkt, es hat keine Fahrbahnberührung und behindert nicht die Aufnahme des Kehrgutes. In der anderen Endstellung steht das Stützrad 26a auf der Fahrbahn auf, die Aufgabevorrichtung ist mit dem Stützrad 26a und den beiden Laufrädern 26 auf der Fahrbahn abgestützt, die Aufgabevorrichtung kann vom Kraftfahrzeug 1 getrennt und als selbständige Einheit rangiert werden.

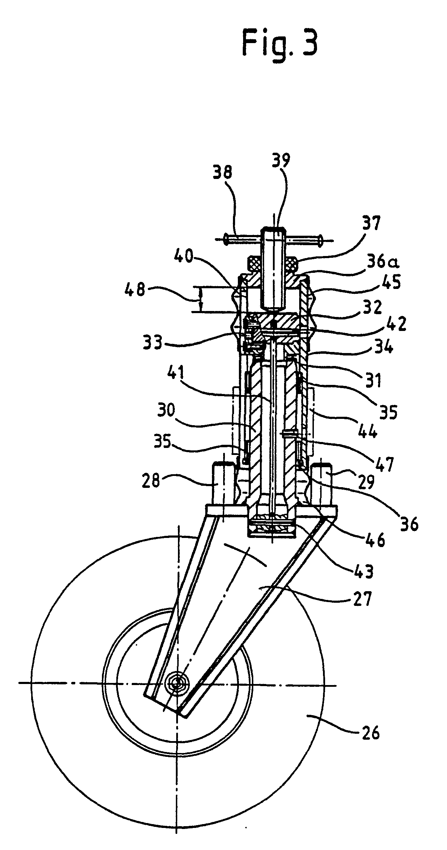

Die beiden Räder 26 sind um eine gemeinsame horizontale Achse drehbar, um je eine vertikale Achse in Grenzen schwenkbar und in vertikaler Richtung verstellbar. Die Lagerung einer dieser beiden in gleicher Weise gelagerten Räder ist in Fig. 3 dargestellt. Das jeweilige Rad 26 ist am unteren Ende zwischen den beiden Schenkeln einer schräg gegen die Vertikale geneigten Gabel 27 um eine horizontale Achse drehbar gelagert. Am oberen Gabelende sind Anschläge 28, 29 befestigt, die mögliche Schwenkbewegungen der Gabel um die vorerwähnte Vertikale begrenzen. Am oberen Gabelende ist die Gabel mit dem unteren Ende eines symmetrisch zu der Vertikalen angeordneten Rohres 30 verschweißt. Auf dem oberen Ende des Rohres 30 ist über ein Axiallager 31 ein Kolben 32 abgestützt, der mittels einer angeschraubten Paßfeder 33 gegen Verdrehen gesichert in einem Außenrohr 34 angeordnet ist, in dem mittels Gleitlagern 35 das Rohr 30 geführt ist. Der Ringspalt zwischen Außenrohr 34 und Innenrohr 30 ist am unteren Ende mit einem Dichtring 36 verschlossen. Am oberen Ende ist das Außenrohr 34 mit einem angeschweißten Deckel 36a verschlossen, auf dessen Oberseite eine Kunststoffmutter 37 aufgesetzt ist. Eine in die Kunststoffmutter 37 eingeschraubte, mit einem Griff 38 versehene, Druckspindel 39 legt die Paßfeder 33 an den unteren Rand eines Fensters 40 des Außenrohres 34 an, wodurch der Kolben 32 axial in dem Außenrohr 34 festgelegt ist. Ein Torsionsstab 41 ist mittels eines Spannstiftes 42 mit seinem oberen Ende in dem Kolben 32 und mittls eines Spannstiftes 43 mit seinem unteren Ende im unteren Ende des Innenrohres 30 festgelegt. Das Außenrohr 34 ist mittels eines Konsoles 44 im Rahmen der Aufgabevorrichtung gehalten. Gummibälge 45 und 46 überdecken die freien Verstellwege zwischen Innenrohr und Außenrohr bzw. den diesen zugeordneten Teilen. Als Fangsicherung dient ein Stift 47.

Der Torsionsstsb 41 ist spannungsfrei eingebaut, wenn das Rad 26 genau in Fahrtrichtung weist. Wird das Rad durch eine äußere Querkraft seitlich ausgelenkt (um die Längsachse des Torsionsstabes 41 und der Rohre 30, 34 geschwenkt), so wird der Torsionsstab in der einen oder anderen Verdrehrichtung gespannt und stellt das Rad nach dem Ende der Wirkung der Querkraft wieder in seine Ausgangslage zurück. Durch Verstellen des Kolbens 32 gegenüber dem Außenrohr 34 innerhalb des Verstell-Hubes 48 kann der Abstand des Rahmens der Aufgabevorrichtung von der Fahrbahn verändert werden und so dem Abnutzungsrad der unteren Bürstenwalze 12 Rechnung getragen werden. Mit dieser erfindungsgemäßen Ausgestaltung der Radlagerung ist eine einfach zu montierende, betriebssichere und nachstellbare Radlagerung gegeben.

Von besonderer Bedeutung ist noch die Lagerung der hinteren Anschlagleiste 17a der Leitvorrichtung im Bereich der Aufnahmeöffnung des Unterteiles 14a des unteren Teilgehäuses 14. Diese Leiste 17a besteht aus Gummi, um gegenüber kleineren Fahrbahnunebenheiten nachgiebig zu sein. Sie ist so bogenförmig ausgestaltet, daß sie sich in die bogen- bzw. zylinderförmige Kontur des Unterteiles 14a einfügt. Um nicht durch grössere Fahrbahnunstetigkeiten zerstört zu werden, ist sie um eine Querachse 49 schwenkbar und zwar um 360°, um auch nach einer Ausweichbewegung sich wieder in die Kontur des Unterteiles 14a einzufügen. Die Schwenkbarkeit um 360° ist gewährleistet durch unsymmetrische Anordnung der Querachse 49 zur Länge der Leiste 17a, so daß die Außenkraft, die zur Ausweichbewegung der Leiste führt, am kürzeren von zwei verschieden langen Hebelarmen angreift.

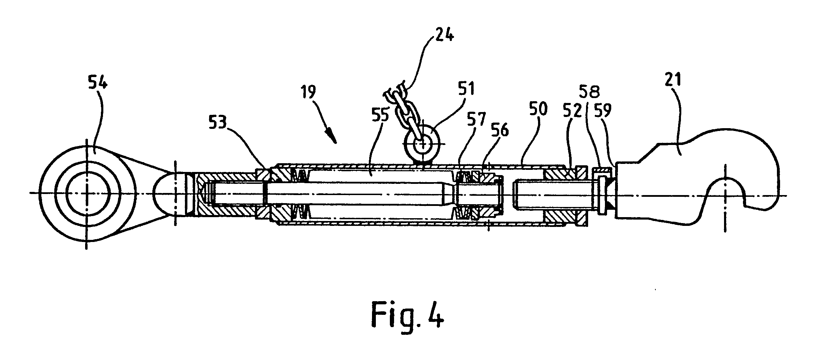

Jeder obere Lenker des oberen Lenkerpaares 19 ist gemäß Fig. 4 als Federzylinder ausgebildet. An der Kette ist das Gehäuse 50 aufgehängt, das hierzu mit einer Öse 51 versehen ist. Das Gehäuse 50 ist an beiden Enden mit je einem Deckel 52 bzw. 53 verschlossen. In den Deckel 52 am vorderen Ende ist der Kupplungshaken 21 mit einem Gewindezapfen eingeschraubt, wobei der Haken bei der einfacheren Lösung auch ein Auge sein kann. Das hintere Ende des Lenkers 19 ist als Öse 54 ausgebildet, die der Aufgabevorrichtung zugeordnet ist. Diese Öse 54 ragt mit einer Stange 55 in deren Längsachse verschiebbar durch den Deckel 53 hindurch und ist am innerhalb des Gehäuses 50 liegenden Ende mit einem Federwiderlager 56 versehen. Zwischen diesem Federwiderlager 56 und dem Deckel 53 ist eine Tellerfeder 57 angeordnet, die im normalen Einbauzustand des Lenkers 19 um ein vorgegebenes Maß vorgespannt ist, um die Länge des Lenkers zu gewährleisten, die notwendig ist, um die Aufgabevorrichtung in einem bestimmten Bewegungsbereich parallel zu sich selbst gegenüber dem Fahrzeug sich bewegwn zu lassen, wie es oben beschrieben wurde. Wird die Aufgabevorrichtung 2 im weiteren Bereich vertikal verstellt, um sich gleichzeitig vom Fahrzeug zu entfernen, so wird die Vorspannung vergrößert, so daß die Tendenz besteht, daß sich die oberen Lenker 19 verkürzen und die Aufgabevorrichtung am Fahrzeug in Anlage halten. Um nun beim Trennen der Aufgabevorrichtung vom Fahrzeug die oberen Lenker durch Abbau der restlichen Vorspannung nicht zu kurz werden zu lassen und zum erneuten Anbau durch erheblichen Kraftaufwand und unter Erzeugung der Ausgangsvorspannung, die gleich der obigen Restvorspannung ist, wieder auf die Einbaulänge zu bringen, ist der Vorrichtung ein offener Distanzring 58 zugeordnet, der zum Trennen der Aufgabevorrichtung 2 vom Fahrzeug 1 zwischen dem Deckel 52 des Gehäuses 50 und einem Bund 59 des Kupplungshakens 21 einsetzbar ist und eine Verkürzung des Lenkers unter das Einbaumaß verhindert.

Der Antrieb der Bürstenwalzen ist von einer Zapfwelle des Fahrzeugantriebes abgeleitet. Die Zapfwelle wirkt auf einen Kettentrieb mit geeigneter Übersetzung, wobei die zentralen Kettenräder am einen Ende des Kettentriebes von der Zapfwelle angetrieben werden und die äußeren Kettenräder an den anderen Enden des Kettentriebes den Bürstenwalzen zugeordnet sind. Ein solcher Kettentrieb kann an jedem Ende der beiden Bürstenwalzen vorgesehen sein, in bestimmten Anwendungsfällen reicht jedoch unter Umständen auch bereits ein Kettentrieb an den einen Enden der Bürstenwalzen aus. Statt des Zapfwellentriebes kann auch ein anderer Antrieb vorgesehen werden, beispielsweise kann ein von der Fahrzeughydraulik betätiger Hydraulikmotor vorgesehen werden. Auch an die Stelle des Kettentriebes an einem oder beiden Enden der Bürstenwalzen kann ein anderer Antrieb, beispielsweise ein Zahnradvorgelege treten.

Der die Eingabeöffnung in der Rückwand des Aufnahmebehälters umgebende Aufnahmerahmen kann auf die Außenseite der Rückwand oder auf deren Innenseite aufgesetzt sein. Die erste Lösung hat den Vorteil einer glatten Behälterinnenwand, was dem Entleeren des Behälters zugute kommt, die letzte Lösung ist optisch befriedigender.

**Patentansprüche**

1. Straßenkehrmaschine mit einer Kehreinrichtung (10), einem Aufnahmebehälter (6) für das Kehrgut und einer Aufgabevorrichtung (2) zum Transport des Kehrgutes von der Straße in den Aufnahmebehälter, wobei zahngetriebeartig ineinandergreifende, den beiden Seitenwänden des Gehäuses (11), der Aufgabevorrichtung gegenüber drehbar gelagerte, Kehrwalzen (12, 13) das Kehrgut aufnehmen und dem Aufnahmebehälter zuführen und wobei der Antrieb der Walzen vom Antrieb des Fahrzeuges abgeleitet ist, dadurch gekennzeichnet, daß die Kehreinrichtung (10) und der Aufnahmebehälter (6) Teile eines für den normalen Straßenverkehr verkehrsfähigen Kraftfahrzeuges (1) sind und die Aufgabevorrichtung (2) eine eigenständige Einheit ist, die mittels Fremdkraft auf der Straße fahrbar und hierzu lösbar mit dem Kraftfahrzeug (1) verbindbar ist, wobei die Aufnahmeöffnung des Gehäuses der Aufgabevorrichtung in der Höhe des Straßenniveaus hinter der Kehreinrichtung (10) liegt und die Abgabeöffnung (18) dieses Gehäuses staubdicht mit der Eingabeöffnung des Aufnahmebehälters (6) verbunden ist.

2. Straßenkehrmaschine nach Anspruch 1, gekennzeichnet durch zwei gegenläufige Tellerbesen (10) symmetrisch zur Längsmittelebene des Kraftfahrzeuges (1) etwa in dessen Quermittelebene, die zwangsweise vom Fahrzeugantrieb um etwa vertikale Drehachsen drehbar angetrieben werden, gekennzeichnet weiter durch eine in der Fahrzeuglängsmittelebene liegende, auf der Straße nahezu aufstehende elastische Auffangleiste für das von den Tellerbesen (10) gegen die Fahrzeuglängsmittelebene geförderte Kehrgut.

3. Straßenkehrmaschine nach Anspruch 2, gekennzeichnet durch einen zwischen dem Fahrerhaus (5) des Kraftfahrzeuges (1) und dem Aufnahmebehälter (6) angeordneten Wassertank (9), dessen steuerbarer Auslaß im Arbeitsbereich der Tellerbesen (10) über der Straße endet und gegen die Straße gerichtet ist.

4. Straßenkehrmaschine nach Anspruch 1, gekennzeichnet durch einen Aufnahmerahmen, der die Eingabeöffnung in der Rückwand des Aufnahmebehälters (6) umgibt und an dem Gegenrahmen (18) des Gehäuses (11) der Aufgabevorrichtung (2), federbelastet vertikal verstellbar angedrückt wird.

5. Straßenkehrmaschine nach Anspruch 1, dadurch gekennzeichnet, daß die Aufgabevorrichtung (2) mit vertikal einstellbaren Laufrädern (26) abgestützt ist und mit einem zusätzlichen Stützrad (26a) versehen ist, das bei angebauter Aufgabevorrichtung von der Fahrbahn frei ist, zum Trennen der Aufgabevorrichtung vom Kraftfahrzeug (1) zum Zusammenwirken mit der Fahrbahn gebracht wird, wobei die Kupplung der Aufgabevorrichtung mit dem Kraftfahrzeug (1) über Lenkerparallelogramme (19, 20) erfolgt, deren übereinanderliegende Lenker an den vorderen Enden (21, 22) an dem Kraftfahrzeug eingehängt sind und die mit ihren hinteren Enden um Querachsen drehbar an der Aufgabevorrichtung (2) gelagert sind, wobei weiter die Lenker derart bemessen sind, daß die Aufgabevorrichtung (2) im unteren Bereich einer vertikalen Bewegung relativ zum Kraftfahrzeug (1) parallel zu sich selbst, in einem weiteren Bereich auf einer Bewegungsbahn bewegt wird, die sich aus einer vertikalen und einer horizontalen Komponenten zusammensetzt, wobei die Richtung der Horizontalkomponente vom Kraftfahrzeug weg gerichtet ist.

6. Straßenkehrmaschine nach Anspruch 5, dadurch gekennzeichnet, daß die unteren Lenker (20) in vertikaler Richtung mittels zumindest eines Stellzylinders (23), vorzugsweise eines hydraulischen Stellzylinders, zwangsweise verstellbar sind und die oberen, in sich elastisch nachgiebigen Lenker (19) zwischen Endenanschlägen vertikal frei verstellbar sind.

7. Straßenkehrmaschine nach Anspruch 1, dadurch gekennzeichnet, daß zwei Bürstenwalzen (12, 13) einzeln aber abhängig voneinander mittels eines Zapfwellenantriebes des Fahrzeugmotors und in einem Gehäuse (11) der Aufgabevorrichtung (2) drehbar übereinander gelagert sind, wobei jede Kehrwalze in einem eigenen, etwa zylindrischen Teilgehäuse (14, 15), die im Übergabebereich zwischen beiden Kehrwalzen durch eine Öffnung miteinander verbunden sind, angeordnet ist, gekennzeichnet weiter dadurch, daß ein Unterteil (14a) des unteren Teilgehäuses (14) fest angeordnet ist, auf ihm — mit ihm lösbar verbunden — eine Einheit aus Oberteil (14b) des unteren Teilgehäuses und Unterteil (15a) des oberen Teilgehäuses (15) abgestützt ist und auf dieser Einheit (14b, 15a) wiederum — mit ihr lösbar verbunden — das Oberteil (15b) des oberen Teilgehäuses abgestützt ist und gekennzeichnet schließlich dadurch, daß das Unterteil (14a) des unteren Teilgehäuses (14) der unteren Walze (13) etwa in Fahrbahnhöhe seine Kehrgutaufnahmeöffnung aufweist, vor der sich eine Kehrgutleitvorrichtung aus einer in Fahrzeugquerrichtung verlaufenden Aufnahmeleiste (17), zwei mit ihren vorderen Enden an deren Enden aufgesetzten, in Fahrzeuglängsrichtung verlaufenden Seitenleisten (16) und einer rückwärtigen Anschlagsleiste (17a) befindet, die aus Gummi bestehen.

8. Straßenkehrmaschine nach Anspruch 1, dadurch gekennzeichnet, daß die Aufgabevorrichtung (2) auf der Fahrbahn mittels zweier Laufräder (26) abgestützt ist, von denen jedes um eine vertikale Achse innerhalb eines durch Anschläge (28, 29) begrenzten Bereiches schwenkbar ist und zwar entgegen der Wirkung einer Rückstellvorrichtung, die ein Torsionsstab (41) ist.

9. Straßenkehrmaschine nach Anspruch 8, dadurch gekennzeichnet, daß der Torsionsstab (41) am einen Ende in einem Widerlager (32) befestigt ist, das der Aufgabevorrichtung zugeordnet ist und am anderen Ende in einem Widerlagen (30) befestigt ist, das dem Radlager (27) zugeordnet ist, wobei das Widerlager (32) der Aufgabevorrichtung (2) ein axial einstellbarer Kolben (32) ist, der drehfest in einem Außenrohr (34) angeordnet ist, das sich über den Kolben auf einem Innenrohr (30) abstützt, das als eines der Widerlager mit dem Radlager (27) verbunden ist, wobei weiter Innenrohr (30) und Außenrohr (34) relativ zueinander um ihre gemeinsame Längsachse drehbar, in Richtung der Längsachse gegeneinander zwangsweise verstellbar, einander zugeordnet sind, wobei weiter vorgesehen sind

a) eine in einem Deckel (36a, 37) des Außenrohres (34) zwangsweise drehbar und dadurch längsverschieblich gelagerte Stellspindel (39) als einer Endanschlag des Kolbens (32) und

b) ein axial wirkender Anschlag des Innenrohres (30) des anderen Endanschlages des Kolbens, wobei der Kolben spiellos zwischen beiden Endanschlägen sich befindet und wobei schließlich sich das Außenrohr (34) über den Kolben (32) über ein Axiallager (31) auf dem Innenrohr (30) abstützt und Innen- und Außenrohr durch Gleitlager (35) gegeneinander geführt sind.

10. Straßenkehrmaschine nach Anspruch 6, dadurch gekennzeichnet, daß die beiden Anschlüsse (21, 54) jedes oberen Lenkers (19) mit einer Hülse (50) und einer Stange (55) teleskoparting ineinander stecken und zwischen Widerlagern (53, 56) von Stange und Hülse eine vorgespannte Druckfeder (57), vorzugsweise eine Tellerfeder, angeordnet ist, die mit ihrer Federspannung einer Längung des Lenkers entgegenwirkt und im normalen Einbauzustand des Lenkers (19) eine vorgegebene Vorspannung hat, wobei eine Sperre (58) zur Vermeidung des Abbaues der Restspannung der Feder (57) beim Trennen der Aufgabevorrichtung (2) vom Fahrzeug (1) vorgesehen ist.

11. Straßenkehrmaschine nach Anspruch 7, dadurch gekennzeichnet, daß die Anschlagleiste (17a) die zylinderabschnittförmige Kontur des Gehäuses (11) der Aufgabevorrichtung (2) bis in den Fahrbahnbereich fortsetzt und unter dem Einfluß einer in Fahrtrichtung wirkenden äußeren Kraft um 360° um eine Querachse (49) schwenkbar ist, die exzentrisch angeordnet ist, so daß die in Fahrtrichtung wirkende Kraft am kürzeren Leistenabschnitt angreift.

## Claims

1. A road sweeping machine comprising a sweeping means (10), a receptacle (6) for the sweepings and a charging means (2) for conveying the sweepings from the road into the receptacle, the sweepings being taken up and fed to the receptacle by sweeping rollers (12, 13) engaging one in the other after the style of gearwheels and mounted for rotation relatively to the two side walls of the housing (11) of the charging device, the roller drive being derived from the vehicle drive, characterised in that the sweeping means (10) and the receptacle (6) are parts of a motor vehicle (1) capable of running in normal road traffic and the charging device (2) is an independent unit adapted to run on the road by means of external power and is for this purpose releasably connectable to the vehicle (1), the charging device housing reception aperture being situated at road level behind the sweeping means (10) and the discharge aperture (18) of said housing being connected in dust-tight relationship to the inlet aperture of the receptacle (6).

2. A road sweeping machine according to claim 1, characterised by two contra-rotating plate-type brushes (10) disposed symmetrically of the longitudinal central plane of the motor vehicle (1) substantially in the transverse central plane thereof, such brushes being positively driven rotatably about substantially vertical axes from the vehicle drive, further characterised by an elastic collecting strip situated in the longitudinal central plane of the vehicle and substantially upright to the road, such strip being intended for sweepings delivered by the brushes (10) towards the longitudinal central plane of the vehicle.

3. A road sweeping machine according to claim 2, characterised by a water tank (9) which is disposed between the driver's cab (5) of the motor vehicle (1) and the receptacle (6), the controllable outlet of said tank (9) terminating above the road and being directed against the road in the range of operation of the brushes (10).

4. A road sweeping machine according to claim 1, characterised by a receiving frame which surrounds the inlet aperture in the back wall of the receptacle (6) and which is pressed against the companion frame (18) of the housing (11) of the charging device (2) so as to be vertically adjustable under spring loading.

5. A road sweeping machine according to claim 1, characterised in that the charging device (2) is supported by vertically adjustable wheels (26) and is provided with an additional support wheel (26a) which, with the charging device attached, is free of the road, and, for the purpose of separating the charging device from the motor vehicle, is brought into co-operation with the road, the coupling of the charging device to the motor vehicle (1) being by way of link parallelograms (19, 20), the superimposed links of which are attached to the motor vehicle at the front ends (21, 22) and which are mounted with their rear ends on the charging device (2) so as to be rotatable about transverse axes, the links further being so dimensioned that the charging device (2) in the bottom zone of a vertical movement relatively to the motor vehicle (1) is moved parallel to itself while in another zone it is moved over a trajectory made up of a vertical component and a horizontal component, the direction of the horizontal component being directed away from the motor vehicle.

6. A road sweeping machine according to claim 5, characterised in that the bottom links (20) are positively adjustable in the vertical direction by means of at least one adjusting cylinder (23), preferably a hydraulic adjusting cylinder, and the top links (19), which are of themselves elastically resilient, are freely adjustable vertically between end stops.

7. A road sweeping machine according to claim 1, characterised in that two brush rollers (12, 13) are mounted one above the other for rotation individually but in dependence on one another, by means of a power take-off drive from the vehicle engine, said rollers being mounted in a housing (11) of the charging device (2), each sweeping roller being disposed in its own substantially cylindrical sub-housing (14, 15), which housings are interconnected by an aperture in the transfer zone between the two sweeping rollers, further characterised in that a bottom part (14a) of the bottom sub-housing (14) is fixed, a unit consisting of the top part (14b) of the bottom sub-housing and the bottom part (15a) of the top sub-housing (15) is supported on said bottom part (14a) — being releasably connected thereto — and the top part (15b) of the top sub-housing is supported on said unit (14b, 15a) — again being releasably connected thereto — , and finally characterised in that the bottom part (14a) of the bottom sub-housing (14) of the bottom roller (13) has its sweepings receiving aperture substantially at the road level, such aperture being preceded by a sweepings guide device consisting of a receiving strip (17) extending transversely of the vehicle, two side strips (16) fitted by their front ends to the ends of said strip (17) and extending in the longitudinal direction of the vehicle, and a rear stop strip (17a), said strips consisting of rubber.

8. A road sweeping machine according to claim 1, characterised in that the charging device (2) is supported on the road by means of two wheels (26), each of which is pivotable about a vertical axis within a range limited by stops (28, 29), such pivoting movement being in opposition to the action of a return device, which is a torsion rod (41).

9. A road sweeping machine according to claim 8, characterised in that the torsion rod (41) is fixed at one end in an abutment (32) which is associated with the charging device and at the other end is fixed in an abutment (30) associated with the wheel bearing (27), the abutment (32) of the charging device (2) being in an axially adjustable piston (32) disposed to be relatively non-rotatable in an outer tube (34) which bears by way of the piston on an inner tube (30) which is connected, as one of the abutments, to the wheel bearing (27), the inner tube (30) and the outer tube (34) furthermore being so associated with one another as to be rotatable relatively to one another about their common longitudinal axis and positively movable relatively to one another in the direction of the longitudinal axis, there additionally being provided:

a) an adjusting spindle (39) mounted to be positively rotatable in a cover (36a, 37) of the outer tube (34) and hence longitudinally displaceable, such spindle (39) acting as end stop for the piston (32) and

b) an axially acting stop of the inner tube (30) of the other end stop of the piston, the piston being situated without play between two end stops and, finally, the outer tube (34) being supported by way of the piston (32) via an axial bearing (31) on the inner tube (30) and the inner and outer tubes being guided relatively to one another by plain bearings (35).

10. A road sweeping machine according to claim 6, characterised in that the two connections (21, 54) of each top link (19) fit telescopically one inside the other by a sleeve (50) and a rod (55), and a prestressed compression spring (57), preferably a cup spring, is disposed between the abutments (53, 56) of the rod and sleeve, the cup spring tension counteracting any elongation of the link and, in the normal fitted state of the link (19), having a predetermined prestressing, a catch (58) being provided to prevent the residual tension of the spring (57) from being destroyed on separation of the charging device (2) from the vehicle (1).

11. A road sweeping machine according to claim 7, characterised in that the stop strip, (17a) forms a continuation of the partcylindrical contour of the housing (11) of the charging device (2) as far as the road zone and is pivotable about a transverse axis (49) through 360° in response to an external force acting in the direction of travel, said transverse axis (49) being eccentrically disposed so that the force acting in the direction of travel engages the shorter strip part.

## Revendications

1. Balayeuse pour chaussées, comportant un dispositif de balayage (10), un récipient collecteur (6) pour les balayures et un dispositif de chargement (2) pour transporter les balayures de la chaussées dans le récipient collecteur, des rouleaux de balayage (12, 13) qui engrènent l'un avec l'autre à la manière d'engrenages et qui sont montés à rotation en face des deux parois latérales du bâti (11) du dispositif de chargement, reprenant les balayures et les envoyant au récipient collecteur, la commande d'entraînement des rouleaux étant dérivée de la commande d'entraînement du véhicule, caractérisé en ce que le dispositif de balayage (10) et le récipient collecteur (6) sont des éléments d'un véhicule automobile (1) adapté à la circulation normale sur les routes et en ce que le dispositif de chargement (2) est une unité autonome pouvant se déplacer sur la chaussée sous l'action d'une force extérieure et pouvant, pour cela, être reliée au véhicule automobile de façon amovible, l'ouverture d'absorption du bâti du dispositif de chargement étant situé au niveau de la chaussée derrière le dispositif de balayage (10), l'ouverture de chargement (18) de ce bâti étant reliée de façon étanche aux poussières à l'ouverture d'entrée du récipient collecteur (6).

2. Balayeuse pour chaussées selon la revendication 1, caractérisée par deux balais circulaires opposés (10) symétriques par rapport au plan médian longitudinal du véhicule automobile (1) et disposés sensiblement dans le plan médian transversal de ce véhicule. Ces deux balais étant obligatoirement entraînés en rotation autour d'un axe vertical par la commande du véhicule, caractérisée en outre par une barre d'interception des balayures refoulées par les balais circulaires (10) vers le plan médian longitudinal du véhicule, cette barre étant située dans le plan médian longitudinal du véhicule et reposant de façon sensiblement élastique sur la chaussée.

3. Balayeuse pour chaussées selon la revendication 2, caractérisées par un réservoir d'eau (9) disposé entre la cabine de conduite (5) du véhicule automobile (1) et le récipient collecteur (6), la sortie commandée de ce réservoir se terminant au-dessus de la chaussée dans la zone de travail des balais circulaires (10) et étant dirigée vers la chaussée.

4. Balayeuse pour chaussées selon la revendication 1, caractérisée par un châssis d'entrée qui entoure l'ouverture d'entrée de la paroi arrière de récipient collecteur (6) et qui est appliqué, en étant chargé par ressorts et avec possibilité de réglage vertical, contre le châssis antagoniste (18) du bâti (11) du dispositif de chargement (2).

5. Balayeuse pour chaussées selon la revendication 1, caractérisée en ce que le dispositif de chargement (2) repose sur le sol par des roues (26) réglables en direction verticale et est muni d'une roue d'appui supplémentaire (26a) qui est dégagée de la chaussée quand le dispositif de chargement est monté et qui est amenée à coopérer avec la chaussée lorsqu'on sépare le dispositif de chargement du véhicule automobile (1), l'accouplement du dispositif de chargement avec le véhicule automobile (1) ayant lieu au moyen de parallélogrammes articulés (19, 20) dont les bielles situées l'une au-dessus de l'autre sont, à leurs extrémités avant (21, 22), accrochées au véhicule automobile et sont, par leurs extrémités arrière, montées à rotation autour d'axes transversaux sur le dispositif de chargement (2), les bielles étant en outre dimensionnées de façon telle que le dispositif de chargement (2) se déplace, dans un domaine inférieur, parallèlement à lui-même suivant un mouvement vertical par rapport au véhicule automobile (1), dans un autre domaine suivant une trajectoire constituée d'une composante verticale et d'une composante horizontale, le sens de la composante horizontale étant dirigé en s'éloignant du véhicule automobile.

6. Balayeuse pour chaussées selon la revendication 5, caractérisée en ce que les bielles inférieures (20) peuvent être déplacées par force en direction verticale au moyen d'au moins un vérin de manoeuvre (23), de préférence un vérin hydraulique, les bielles supérieures (19), en soi souple et élastiques, étant librement déplaçable en direction verticale entre les butées d'extrémité.

7. Balayeuse pour chaussées selon la revendication 1, caractérisé en ce que deux rouleaux à brosses (12, 13) sont montés à rotation, l'un au-dessus de l'autre dans un bâti (11) du dispositif de chargement (2), individuellement mais en liaison l'un avec l'autre au moyen d'une commande par arbre de prise de force du moteur du véhicule, chaque rouleau de balayage étant disposé dans un élément de carter sensiblement cylindrique (14, 15) qui lui est propre, ces éléments étant reliés entre eux par une ouverture dans la zone de transmission entre les deux rouleaux de balayage, caractérisée en outre en ce qu'une partie inférieure (14a) de l'élément de carter inférieur (14) est à disposition fixe, une unité formée de la partie supérieure (14b) de l'élément de carter inférieur et de la partie inférieure (15a) de l'élément de carter supérieur (15) s'appuyant sur la partie inférieure (14a) en étant assemblée de façon amovible avec elle, la partie supérieure (15b) de l'élément de carter supérieur s'appuyant sur cette unité (14b, 15a) en étant encore assemblée de façon amovible avec elle, et caractérisée enfin en ce que la partie inférieure (14a) de l'élément de carter inférieur (14) du rouleau inférieur (13) présente son ouverture d'absorption de balayures sensiblement au niveau de la chaussée, ouverture devant laquelle se trouve un dispositif de guidage de balayures constitué d'une barre d'interception (17) s'étendant dans la direction transversale du véhicule, de deux barres latérales (16) raccordées par leurs extrémités avant aux extrémités de la barre d'interception et s'étendant dans la direction longitudinale du véhicule, ainsi que d'une barre de butée arrière (17a), ces barres étant en caoutchouc.

8. Balayeuse pour chaussées selon la revendication 1, caractérisée en ce que le dispositif de chargement (2) repose sur la chaussée au moyen de deux roues (26), chacune d'elles pouvant pivoter autour d'un axe vertical à l'intérieur d'un domaine limité par des butées (28, 29), le pivotement ayant lieu contre l'action d'un organe de rappel qui est une barre de torsion (41).

9. Balayeuse pour chaussées selon la revendication 8, caractérisée en ce que la barre de torsion (41) est fixée à une extrémité dans un appui (32) associé au dispositif de chargement et est fixée à l'autre extrémité dans un appui (30) associé au support de roue (27), l'appui (32) du dispositif de chargement (2) étant un piston (32) réglable en direction axiale et disposé sans possibilité de rotation dans un tube extérieur (34) qui s'appuie par l'intermédiaire du piston sur un tube intérieur (30) assemblé avec le support de roue (27) comme étant l'un des appuis, le tube intérieur (30) et le tube extérieur (34) pouvant en outre tourner l'un par rapport à l'autre autour de leur axe longitudinal commun, et étant associé l'un à l'autre pour être réglés par force l'un par rapport à l'autre dans la direction de l'axe longitudinal, les organes suivants étant en outre prévus :

a) une broche de réglage (39) montée dans un couvercle (36a, 37) du tube extérieur (34) pour tourner avec un déplacement longitudinal obligatoire en formant l'une des butées d'extrémité du piston (32) et

b) une butée à action axiale du tube intérieur (30) formant l'autre butée d'extrémité du piston, le piston étant disposé sans jeu entre les deux butées d'extrémité, le tube extérieur (34) s'appuyant enfin sur le tube intérieur (30) par l'intermédiaire du piston (32) et d'un appui axial (31), le tube intérieur et le tube extérieur étant guidés l'un par rapport à l'autre par un palier à glissement (35).

10. Balayeuse pour chaussées selon la revendication 6, caractérisée en ce que les deux raccords (21, 54) de chaque bielle supérieure (19) sont engagés de façon télescopique l'un dans l'autre au moyen d'un fourreau (50) et d'une tige (55), un ressort de compression précontraint (57), de préférence un ressort Belleville, étant disposé entre des appuis (53, 56) de la tige et du fourreau, la contrainte élastique de ce ressort s'opposant à l'allongement de la bielle, le ressort ayant une précontrainte prédéterminée dans l'état de montage normal de la bielle (19), un organe d'arrêt (58) étant prévu pour éviter l'annulation de la précontrainte résiduelle du ressort (57) lorsqu'on sépare le dispositif de chargement (2) du véhicule (1).

11. Balayeuse pour chaussées selon la revendication 7, caractérisée en ce que la barre de butée arrière (17a) prolonge le contour en forme de secteur de cylindre du bâti (11) du dispositif de chargement (2) jusque dans la zone correspondant à la chaussée et peut basculer sur 360° autour d'un axe transversal sous l'action d'une force extérieure agissant suivant la direction de marche, l'axe transversal étant excentré de sorte que la force agissant dans la direction de marche attaque le levier plus court de la barre de butée.

Fig.1

# Fig. 2

# Fig. 3

Fig.4